Europäisches Patentamt
European Patent Office
Office européen des brevets

(19) (11) Publication number: **0 019 717 A1**

# EUROPEAN PATENT APPLICATION

(21) Application number: **80102155.1**

(22) Date of filing: **22.04.80**

(51) Int. Cl.³: **C 25 B 5/00**, H 01 M 8/22

(30) Priority: **23.04.79 US 32151**
**23.04.79 US 32466**

(43) Date of publication of application: **10.12.80**
**Bulletin 80/25**

(84) Designated Contracting States: **AT BE CH DE FR GB IT LI LU NL SE**

(71) Applicant: **OCCIDENTAL RESEARCH CORPORATION, 2100 S.E. Main Street, Irvine, California 92714 (US)**

(72) Inventor: **Broniewski, Bogdan M., 2527 Alta Vista Drive, Newport Beach California 92660 (US)**

(74) Representative: **Jack, Bruce James et al, FORRESTER & BOEHMERT Widenmayerstrasse 5/IV, D-8000 Munchen 22 (DE)**

(54) **Simultaneous production of alkali metal hydroxide and electric energy.**

(57) Alkali metal hydroxide solutions such as chloralkali cell liquors are concentrated by electrolysis of such solutions in a two-compartment hybrid cell comprising an anode compartment and a cathode compartment separated by a cation permeable diffusion barrier; or in a three-compartment cell comprising an anode compartment, a cathode compartment, and a central compartment defined on the anode side by a cation permeable diffusion barrier and on the cathode side by a diaphragm. To enable operation, gaseous hydrogen is supplied to the anode, oxygen to the cathode and an aqueous media receptive to alkali metal ions to the cathode and, if used, the central compartment. A plurality of the hybrid cells may be operated in hydrodynamic series. The hybrid cell can generate electrical power that may be used to supply part of the power required by a chloralkali cell the liquor of which is being concentrated in the hybrid cell.

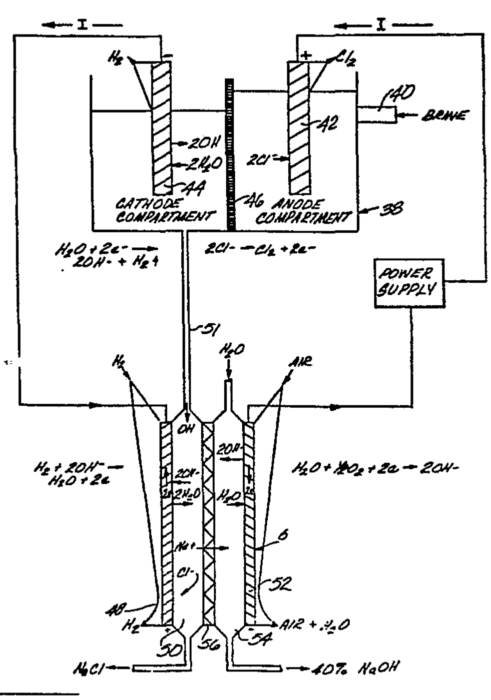




ACTORUM AG

0019717



# CONCENTRATING ALKALI METAL HYDROXIDE IN HYBRID CELLS

TITLE MODIFIED
see front page

## Background of the Invention

The present invention relates to the concentration of alkali metal hydroxide solutions, having for its object the provision of an electrochemical process for such a purpose that is especially applicable to the treatment of cell liquor from a chloralkali cell to separate the sodium ions from the cell liquor and concentrate them in another liquor as a sodium hydroxide solution.

The production of chlorine and crude caustic (sodium hydroxide) solutions by electrolysis of brine is a major industry. Two types of electrolysis cells are primarily used in the production of chlorine and caustic. They are the diaphragm cell and the mercury cell. Membrane cells are also used to a minor but growing extent. Considerable quantities of energy are required for electrolysis of the brine to produce chlorine and subsequent treatment of the cell liquor resulting from electrolysis in diaphragm cells is necessary to obtain caustic solutions of the desired purity and concentration. A 50 weight percent aqueous caustic solution of low sodium chloride content is a commercially desired product.

Known processes for electrolysis of brine in diaphragm, mercury and membrane cells produce cathode cell liquors having a caustic content ranging from about 10 to 12 percent by weight in the case of diaphragm cells to as high as about 40 percent by weight in the case of membrane cells, and as much as 50 percent by weight in the case of mercury cells. The liquor produced in diaphragm cells may contain up to 15 percent by weight of sodium chloride, but this is

virtually absent in the liquor of membrane cells and essentially absent in the liquor of mercury cells. Although they produce the most desirably concentrated and pure caustic liquor, mercury cells have environmental problems and are no longer the technology of choice in industrialized countries.

In the diaphragm cell, brine is continuously fed to an anode compartment, where chlorine is produced, and then flows through a diaphragm, usually made of asbestos, to a cathode compartment. Hydrogen gas is discharged from the solution at the cathode, with attendant generation of hydroxyl ions. To minimize back-migration of hydroxyl ions from the cathode compartment to the anode compartment, a positive flow rate is always maintained; that is a flow in excess of the conversion rate. As a consequence, the resulting catholyte solution, i.e., the cathode cell liquor as the term is used herein, contains unconsumed sodium chloride in addition to product sodium hydroxide. The cathode cell liquor containing, typically, only 10 to 12 percent of sodium hydroxide and about 15 percent of sodium chloride must be purified and concentrated to obtain a saleable caustic solution.

A membrane cell, which employs a membrane selectively permeable to certain cations in place of a diaphragm, yields a catholyte of low salt content and having a caustic content of up to about 40 percent by weight. The highly corrosive chlorine medium, however, is harsh on membrane materials. Accordingly, specifications for the membrane must be rigid and the membranes useful in the presence of chlorine are quite expensive. In addition, voltage drop within the membrane cell is relatively high which increases consumption of electricity. In sum, membrane cells are costly in regard to investment and operating costs.

Typical processes for concentrating cell liquor and separating the sodium chloride from the caustic involve evaporation and crystallization with the consumption of large amounts of steam and consequently, fuel required to

generate steam. Investment in such processes is considerable.

One solution to the problem of obtaining cell liquor having high caustic concentration is described in U.S. Patent No. 3,899,403 to Cook, Jr., et al. A three-compartment electrolytic cell produces solutions of high and low caustic concentration. A two-compartment cell then concentrates the solution of low caustic concentration. Current efficiency in the two-compartment cell is lower than that in the three-compartment cell.

U.S. Patent No. 4,036,717 to Babinsky et al describes a three-chamber electrolytic cell for concentrating and purifying cell liquor containing sodium or potassium hydroxide. The Babinsky cell has a porous catalytic anode, a porous asbestos diaphragm between the anode chamber and a central chamber, and a cation-permselective membrane between the central chamber and the cathode chamber. Cell liquor is passed through the central chamber and concentrated caustic is withdrawn from the cathode chamber. Hydrogen gas generated by the electrolysis is supplied to the anode to decrease the potential across the cell below the evolution potential for chlorine and coincidentally reduce the power requirements for the cell.

The use of hydrogen-air fuel cells to consume hydrogen gas from chloralkali cells and to produce electricity for powering a portion of the chloralkali cells is described in Canadian Patent No. 642,449. In the process described, hydrogen formed by the electrolysis of brine in a chloralkali cell is fed to the anode of a fuel cell and air is fed to the cathode. The fuel cell employs an aqueous electrolyte of sodium or potassium hydroxide having a concentration of 5 to 50 weight percent. There is no suggestion in the patent that the cell liquor from the chloralkali cells can be purified or concentrated by using such cell liquor as the electrolyte in the fuel cell.

U.S. Patent No. 3,511,712 to Giner describes a process for removing carbon dioxide from gas streams using a fuel

cell. An alkali metal carbonate solution formed by absorption of carbon dioxide is introduced to the anode compartment of a fuel cell operating by consumption of an oxidant and a fuel to generate hydrogen ions, consume hydroxyl ions and generate electricity. Operation decreases the pH of the electrolyte in the vicinity of the anode to a point where carbon dioxide is evolved with a simultaneous increase of pH. This restores the carbon dioxide absorptive capacity of the solution. The patent does not suggest the use of a fuel cell to purify and concentrate chloralkali cell liquor and, in fact, the Giner process would not be suitable for the treatment of cell liquor because the required lowering of the anolyte pH to 9 results in polarization of the anode and a severe lowering of the current efficiency of the cell.

Summary of the Invention

In accordance with the present invention, there is provided a process for the simultaneous production of alkali metal hydroxide and the generation of electrical energy using a hybrid cell. The invention is particularly useful in forming a purified and concentrated caustic solution from the effluent of a chloralkali cell with attendant generation of electrical energy for use by the chloralkali cell.

The process of the invention is characterised by

(a) introducing flow of an aqueous solution of at least one alkali metal hydroxide as anolyte to an anode compartment of at least one hybrid cell, the hybrid cell comprising a gas diffusion anode having first and second surfaces, a diffusion barrier selectively permeable to cations and having first and second surfaces, and a gas diffusion cathode having first and second surfaces, the first surface of said anode and the first surface of said diffusion barrier defining said anode compartment, the first surface of said cathode and said second surface of said diffusion barrier defining a cathode compartment,

said anode compartment having an inlet and an outlet, said cathode compartment having an inlet and an outlet, said anolyte flowing from the inlet to the outlet of said anode compartment;

(b) introducing flow of an aqueous fluid medium receptive to alkali metal ions as catholyte through said cathode compartment from inlet to outlet;

(c) causing, by a flow of current through an external load between said cathode and said anode and generated by oxidation of hydrogen supplied to the second surface of said gas diffusion anode and generation of hydroxide ions by reduction of an oxygen-containing gas supplied to the second surface of the gas diffusion cathode, alkali metal ions to selectively pass from the anolyte through said diffusion barrier to the catholyte in the cathode compartment to form with cathode generated hydroxide ions, an aqueous solution of alkali metal hydroxide;

(d) withdrawing from said cathode compartment catholyte which is more concentrated in respect to alkali metal hydroxide than the aqueous medium introduced to said cathode compartment; and

(e) withdrawing from the outlet of said anode compartment anolyte depleted in alkali metal hydroxide.

The process may be conducted in a three-compartment hybrid cell comprising a diaphragm permeable to both cations and anions and having first and second surfaces located between the first surface of the cathode and the second surface of the diffusion barrier, [redacted] the first surface of the diaphragm defining with the second surface of the diffusion barrier a central compartment, the second surface of the diaphragm defining with the first surface of the cathode the cathode compartment, the central compartment having an inlet and an outlet in flow communication with the inlet of the cathode compartment and wherein said flow of an aqueous fluid medium receptive to alkali metal ions is introduced as catholyte to the central compartment.

Preferably air, the most economical supply of oxygen, is passed over the surface of the cathode opposite to the cathode surface in contact with the catholyte, i.e., the second cathode surface, in a quantity sufficient to remove water from the cathode to concentrate the solution of alkali metal hydroxide flowing through the cathode compartment.

In sum, separation of alkali metal ions from the solution introduced to the anode compartment occurs by alkali metal ions migrating through the diffusion barrier and concentration of caustic in the cathode compartment occurs by diffusion and electrolytic consumption of water with reduction of oxygen and evaporation of water.

The net result of the process is to cause the aqueous solution of alkali metal hydroxide, as it passes through the anode compartment, to be continuously depleted of hydroxyl ions, and alkali metal ions for ionic neutrality, resulting in an alkali metal ion and hydroxide concentration gradient existing between the inlet and outlet of the anode compartment. As a consequence of acceptance of alkali metal ions by the aqueous media passing through the cathode compartment and, in the case of a three-compartment cell, through the central compartment as well, and generation of hydroxide ions by reduction of oxygen, the aqueous media becomes more concentrated in alkali metal hydroxide as it progresses through the cathode compartment and, if employed, the central compartment. The catholyte leaves the cathode compartment as a solution more concentrated in alkali metal hydroxide than the aqueous media introduced to the cathode or central compartment.

The present invention, in its preferred application, is for the treatment of a chloralkali cell liquor to produce a purified and concentrated aqueous caustic solution. In this application, chloralkali cell liquor containing sodium hydroxide and sodium chloride is introduced into the anode compartment of a two or three-compartment hydrid cell which preferably employs thin compartments. Hydrogen, generated by the chloralkali cell, is contacted with one surface of

the gas diffusion anode of the hybrid cell. The hydrogen is oxidized at the anode with the production of water. The anode of a hybrid cell is separated from the cathode compartment by a diffusion barrier selectively permeable to cations, preferably a membrane.

Although the electrical energy generated as a consequence of the electrochemical oxidation and reduction reactions which occur in the hybrid cell may be fed to any load, it is advantageous to combine a number of hybrid cells in a circuit and feed the power output to a chloralkali cell to provide part of the electrical energy required to operate the chloralkali cell.

The following occurs in the hybrid cell when operated on chloralkali cell liquor. Sodium ions from the introduced chloralkali cell liquor pass transverse to the flow of the anolyte chloralkali cell liquor in the anode compartment, through the diffusion barrier and into the catholyte flowing in the cathode compartment. If a three-compartment cell is employed, the sodium ions pass through the diffusion barrier and into the catholyte flowing in the central compartment, and enter the cathode compartment as part of the aqueous medium flowing from the central compartment to the cathode compartment and by passage through the diaphragm.

Hydroxyl ions generated as a consequence of reduction of oxygen at the cathode combine with the transferred sodium ions to form sodium hydroxide. Consumption of water by generation of hydroxyl ions also serves to concentrate the sodium hydroxide solution being formed in the cathode compartment. Additional concentration occurs by evaporation of water through the cathode into air passing over the surface of the cathode opposite to the surface in contact with the catholyte. This water evaporation also serves to cool the hybrid cell.

A plurality of hybrid cells may be staged in a cascade. The cells are operated hydrodynamically in series. The anolyte flows sequentially through the anode compartments of the hybrid cells. The catholyte flows sequentially

through the cathode compartments of the two-compartment hybrid cells, or through both the central and cathode compartments in a three-compartment cell cascade. Each hybrid cell is operated under conditions which are effective for removing only a fraction of the alkali metal from the anolyte and concentrating it in the catholyte. The anolyte flow may be cocurrent or countercurrent to the catholyte flow. The fluids may either ascend or descend the cascade. The cascade may include a bypass connecting a cathode compartment outlet with the initial cathode compartment inlet to improve the conductivity of the catholyte by addition of some of the produced alkali metal hydroxide to the cathode feed.

Brief Description of the Drawings

The invention may be more clearly understood by reference to the drawings, wherein:

FIG. 1 is a schematic illustration of a two-compartment hybrid cell used in practice of this invention;

FIG. 2 is a partial cross-sectional view of a hybrid cell having a plurality of thin cell units;

FIG. 3 is a flow diagram showing a chloralkali cell and a hybrid cell being operated in combination;

FIG. 4 is a schematic illustration of a three-compartment hybrid cell used in practice of this invention;

FIG. 5 is a partial cross-sectional view of a three-compartment hybrid cell having a plurality of thin cell units;

FIG. 6 is a flow diagram showing a chloralkali cell and a three-compartment hybrid cell being operated in combination; and

FIG. 7A is a schematic illustration of a cocurrent cascade of individual hybrid cells showing the sequence and arrangement of the cells in the cascade;

FIG. 7B is a schematic illustration of a counter-current cascade of individual hybrid cells.

Detailed Description

Alkali metal hydroxide solutions, especially solutions containing alkali metal halides, can be treated in accordance with this invention. For convenience of explanation, the feed solution typically has an alkali metal concentration between about 5 and 30 weight percent, calculated as the alkali metal hydroxide. Preferably, the solution is a chloralkali cell liquor, having a sodium hydroxide concentration of up to about 25 weight percent, preferably between about 10 and 25 weight percent sodium hydroxide, and up to about 26 weight percent sodium chloride, preferably up to about 15 weight percent sodium chloride. Solutions of other alkali metal hydroxides, such as potassium hydroxide and lithium hydroxide, can also be treated. The cell liquor can also contain other alkali metal salts, such as sodium bromide, potassium iodide, and the like. The invention is adaptive to treating liquors from chloralkali cells, including diaphragm cells, membrane cells, and the like. Methods of operating such cells and the nature of the cell liquor produced in their operation are well known to those skilled in the art and have been described in an extensive body of technical publications and patents. Accordingly, the ensuing description will be directed primarily to the operation of the hybrid cells alone and in combination with choralkali cells.

FIG. 1 schematically depicts the operation of a two-compartment hybrid cell of this invention. A chloralkali cell liquor, containing about 10 weight percent NaOH and about 15 weight percent NaCl is introduced, as anolyte, into the anode compatment of the hybrid cell. The compartments of the hybrid cell are designed to provide flow substantially in one direction from inlet to outlet without appreciable mixing, back convection, or diffusion parallel to the electrodes of molecules and

ions in the compartments. Preferably a condition of plug flow is maintained. This is more easily achieved when the average distance (d) between anode and membrane and membrane and cathode are respectively abut 1mm or less, typically about 0.1mm to about 1mm.

The cell liquor contacts a gas diffusion anode. Hydrogen gas from any source, and preferably from the chloralkali cell, contacts the opposite side of the anode. The anode provides a surface for intimate contact between the hydrogen gas to the anolyte.

Hydrogen gas undergoes an oxidation reaction with the anolyte hydroxide ion at the anode which may be schematically represented as:

$$H_2 + 2OH^- \rightarrow 2H_2O + 2e-$$

As the anolyte flows through the anode compartment, its hydroxide ion content is progressively reduced and its water content progressively increased.

FIG. 4 schematically depicts the operation of a three-compartment hybrid cell of this invention. The anode, anode compartment, and anolyte used in the three-compartment hybrid cell of FIG. 4, and the operation thereof, are substantially the same as in the two-compartment hybrid cell of FIG. 1.

Separating the anode compartment from the cathode compartment of FIG. 1, or from the central cathode compartment (hereinafter referred to as the central compartment) of FIG. 4, is a cation-permselective diffusion barrier, preferably a membrane. This is a barrier which is permeable to cations such as a sodium ion, but is relatively impermeable to anions such as the chloride ions. To maintain electroneutrality and to account for depletion of hydroxide ions from the anolyte, sodium ions,

under condition of current flow through an external load, separate from the anolyte and pass through the cation-permselective barrier into a catholyte passing through the cathode compartment of the hybrid cell of FIG. 1, or the central compartment of the hybrid cell of FIG. 4. Substantially all of the chloride ions remain in the anolyte, along with sufficient sodium ions to electrically balance the chloride ions.

The cathode compartment of the two-compartment fuel cell of FIG. 1, and the central compartment of the three-compartment fuel cell of FIG. 4, are separated from the relevant anode compartment by the above-mentioned cation-permselective diffusion barrier. The central compartment of the three-compartment cell is separated from the cathode compartment by a diaphragm which is permeable both to anions and cations, such as a semi-permeable asbestos diaphragm.

In the two-compartment cell of FIG. 1, an aqueous medium such as water or a dilute ionic solution, which may be part of the solution drawn from the anode compartment, is introduced as catholyte into the cathode compartment and progressively picks up sodium ions moving through the cation-permselective membrane. The catholyte contacts one surface of a gas diffusion cathode where oxygen gas, preferably from air, undergoes a reduction reaction with the catholyte water which may be schematically represented as follows:

$$H_2O + 1/2\ O_2 + 2e^- \rightarrow 2OH^-$$

The generated hydroxide ions balance the sodium ions which enter the catholyte to form a caustic solution having increased caustic concentration in the direction of flow of the catholyte. Concentration is due in part

to consumption of water at the cathode.

In the three-compartment hybrid cell of FIG. 4, an aqueous medium such as water or a dilute ionic solution, which may be part of the solution drawn from the anode compartment, is introduced as catholyte into the central compartment, and progressively picks up sodium ions moving through the cation-permselective membrane.

Catholyte in the cathode compartment contacts a gas diffusion type cathode where oxygen is reduced by the schematic equation:

$$H_2O + 1/2\ O_2 + 2e^- \rightarrow 2OH^-$$

preferably as a consequence of the passage of air over the cathode. Some of the hydroxide ions pass from the cathode compartment to the central compartment. The net effect is that the sodium hydroxide content of the catholyte increases as it flows through the central compartment.

A catholyte, now of intermediate sodium hydroxide concentration, is withdrawn from the central compartment and introduced into the cathode compartment of the three-compartment hybrid cell. A proportion of the sodium ions entering the central compartment through the cation-permselective membrane continues on through the ion-permeable barrier or diaphragm into the cathode compartment. When sodium hydroxide solution from the central compartment is introduced into the cathode compartment, the sodium ions which pass through the ion permeable barrier accumulate in the catholyte contacting the gas diffusion type cathode. Oxygen from the air is reduced, forming hydroxide ions to balance the sodium ions and consume water of the catholyte; thus partially concentrating the sodium hydroxide solution.

Contemporaneoulsy, in the operation of either the two-compartment or the three-compartment cell, some water from the catholyte evaporates at the opposite surface

of the cathode into the air stream. For a given cathode surface area and permeability, the flow of air may be regulated to control evaporation of water from the surface of the cathode to modify the concentration of sodium hydroxide in the catholyte. In practice, the rate of addition of water to either the cathode or the central compartment, the rate of transport of water through the cation-permselective diffusion barrier into the catholyte, the rate of consumption of water at the cathode, and the rate of evaporation of water from the cathode, are all correlated so as to provide a product catholyte of desired caustic concentration.

Thus, when the cell liquor, the water and the catholyte introduced to the two- or three-compartment hybrid cell all flow through their respective compartments concurrently, as shown in FIG. 1, and in FIG. 4, the sodium hydroxide concentration of the relevant anolyte decreases from about 12% by weight at the appropriate inlet and approaches 0.5% or less at the outlet. The sodium hydroxide concentration of the relevant catholyte, by contrast, increases from about 0% at the appropriate inlet to about 40% more at the outlet. High concentration differences are achievable with currently available membranes and diaphragms.

As indicated, the anolyte withdrawn from the anode compartment is substantially depleted of sodium hydroxide. However, even when the effluent from the anode compartment contains as little as 0.1 weight percent or 0.01 weight percent of sodium hydroxide, the pH of the effluent is high, i.e., above 12. The high pH of the effluent from the anode compartment is advantageous in that polarization and loss of current efficiency which can be associated with a change from an alkaline to a neutral or acid pH within the cell is minimized.

The process and hybrid cell illustrated in FIG. 1 or FIG. 4 can, of course, be used to treat cell liquors having differing concentrations of alkali metal hydroxide and alkali metal halide. By regulating the flow of water or dilute aqueous alkali hydroxide into the cathode compartment of FIG.1, or into the central compartment of FIG. 4, and by the evaporation of water from the porous cathode, the concentration of the product flowing from the cathode compartment can be varied over a wide range. Thus, the range of concentrations of product alkali metal hydroxide can be achieved at will.

The hybrid cell can be arranged in a filter press type structure with a multitude of elementary hybrid cells connected in series forming a net hybrid cell.

FIG. 2 is a partial cross-sectional view of a portion of a filter press hybrid cell unit showing the sequence and arrangement of elements in the cell. There is provided gas diffusion cathodes 10 and electrically conductive gas separator and current collectors 12 which helps to define air channels 14 and hydrogen channels 16; gas diffusion anodes 18; an anolyte compartment 20; a catholyte compartment 24 and membrane 26. The following conduits are formed by insulating ported spacers 30: conduit 28 serves hydrogen channels 16; conduit 32 is for the anolyte liquor to be processed; conduit 34 is for the aqueous catholyte media and conduit 36 is for the air fed to channels 14.

FIG. 5 is a partial cross-sectional view of a portion of another filter press type of hybrid cell

unit showing the sequence and arrangement of elements in the cell. There is provided gas diffusion type cathodes 110 and electrically conductive gas separator and current collectors 112 which help to define air channels 114 and hydrogen channels 116; gas diffusion type anodes 118; an anolyte compartment 120; central compartment 122; the catholyte compartment 124; membrane 126 and diaphragm 128. The following conduits are formed by insulating ported spaces 132: conduit 130 which serves hydrogen channels 116; conduit 134 is for the liquor to be processed; conduit 136 for water; conduit 138 for fluid flow to cathode compartment 124; while conduit 140 is for feed of air to channels 114.

Given the sequence of elements, such variables as the thickness and spacing of elements, the shape of the air and hydrogen channels are subject to wide variation. In addition, many different materials of construction may be employed because the process of this invention is practiced under relatively mild conditions, particularly when compared with the highly oxidative and corrosive conditions found in a chloralkalki cell. Thus, any material stable to alkali metal hydroxide and cell operating temperature may be used.

Materials of construction and cell construction arrangements are described, for instance, in U.S. Patents 3,098.762; 3,196,048; 3,296,025; 3,511,712; 3,516,866; 3,530,003; 3,764,391; 3,899,403; 3,901,731; 3,957,535; 4,036,717 and 4,051,002 and British Patent Specifications 1,211,593 and 1,212,387, each incorporated herein by reference.

The cation permselective membranes may be perfluorosulfonic acid polymers manufactured by du Pont under the trade name Nafion and perfluorocarboxylic acid polymers manufactured by Asahi Chemical Co. Other low cost membranes prepared from sulfonated polymers, carboxylated hydrocarbon polymers, phenolic resins, polyolefins and the like, may also be used.

Whatever the selected material, the membrane should, preferably have a permselectivity in 40% NaOH of at least about 0.95, an ohmic resistance not more than about 3 ohm-cm and an electrosmotic coefficient of not more than about 74 gms of water per Faraday.

The gas diffusion anodes and cathodes currently employed in the fuel cell art may be used in the construction of the hybrid cells and are semi hydrophobic. They generally consist of a gas diffusion layer which may be catalytic per se or have catalytic properties induced or promoted by a noble metal and the like. A suitable gas diffusion type cathode and/or anode may be formed of activated carbon which may be catalyzed by a noble metal and combined with a support material such as Teflon.

The porous diaphragms can be made of fuel cell grade asbestos films, porous rubber battery separators, or ion exchange membranes which are permeable to both anions and cations.

For the three-compartment type of hybrid cells, it is contemplated that the catholyte can be transferred from a central compartment of the hybrid cell to the cathode compartment in either or both of two ways. First, the catholyte can be withdrawn from an outlet of the central compartment and introduced into an inlet of the cathode compartment. Second, by establishing a pressure differential across a porous diaphragm, the catholyte from the central compartment can be made to flow through the diaphragm into the cathode compartment. Both means of transferring catholyte from the central compartment to the cathode compartment can be employed simultaneously. Liquid permeable polymeric films and woven or non-woven fabrics may also be used as materials of construction for the porous diaphragm.

The hybrid cell can be operated at any temperature which

maintains the electrolytes in a liquid state and avoids the precipitation of dissolved constituents such as alkali metal halide or alkali metal hydroxide. Temperatures of from about 20°C to 100°C, more preferable 40°C to 70°C, may be employed. Because the cell liquor from a chloralkali cell is warm and because heat is generated within the fuel cell during its operation, it is necessary to cool the cell to maintain a desired operating temperature. The cell is conveniently cooled as an incidence of evaporation of water from the catholyte through the gas diffusion cathode into the stream of air which is passed across the surface of the cathode opposite to the surface in contact with the catholyte to supply oxygen to the cathode. In a filter press type of construction, the individual cells are so thin that there is excellent heat transfer between the anode, cathode, and fluid compartments.

To achieve effective cooling through the cathode by evaporation, it may be desirable to continuously introduce fresh, dry air into the hybrid cell at a point removed from the air intake which supplies the hybrid cell. Air can be dried conveniently be passing it over cooling coils or through desiccant such as silica gel in accordance with known methods. The flow of electrolytes through the compartments of the fuel cell can be cocurrent as shown in FIG. 1 or countercurrent. Cocurrent flow is presently preferred.

Air is the lowest cost source of oxygen required for the cathode and serves to carry off evaporated water. Other oxygen-containing gases as well as oxygen enriched air can also be used but at greater expense.

FIG. 3 shows the interrelationships between chloralkali cells and hybrid cells used to treat the cell liquor from the chloralkali cells in accordance with this invention. Brine is introduced to the chloralkali cell 38 by line 40.

Chlorine is generated at anode 42 and hydrogen released at cathode 44. Diaphragm 46 separates the compartments. Hydrogen generated in the chloralkali cells is supplied to has diffusion anode 48 of the hybrid cell 49 and cell liquor to anode compartment 50 by line 51. Air is supplied to the gas diffusion cathode 52 and water to cathode compartment 54. With current flow, as induced by reduction of oxygen at the cathode and oxidation of hydrogen at the anode, sodium ions pass through diffusion barrier 56 to the cathode compartment.

FIG. 6 shows the inter-relationship between chloralkali cells and three-compartment hybrid cells used to treat the cell liquor from the chloralkali cells in accordance with this invention. Brine is introduced to the chloralkali cell 142 by line 144. Chlorine is generated at anode 146 and hydrogen released to cathode 148. Diaphragm 150 separates the compartments. Hydrogen generated in the chloralkali cell is supplied to anode 150 of the cell 152 and cell liquor fed to anode compartment 154 by line 156. Air is supplied to gas diffusion cathode 158 and water to central compartment 160. With current flow as induced by reduction of oxygen at the cathode and oxidation of the hydrogen at the anode, sodium ions pass through the membrane to the central and cathode compartments. Catholyte is drawn from compartment 162 by line 164. Line 166 connects the central compartment with the cathode compartment. The membrane is shown as 168 and the diaphragm as 170.

The hybrid cell of either FIG. 3 or FIG. 6 is in series with the chloralkali cell and will produce a fraction of the power consumed by the chloralkali cell. Thus, while additional electric current from an outside source is required to operate the chloralkali cell and is shown as "power supply", the external energy required to operate the chloralkali cell is reduced.

In a typical operation of the two-compartment hybrid cell, a cell liquor containing about 10 percent by weight NaOH and 15 percent by weight NaCl is supplied to anode compartment 50. Water is introduced to cathode compartment 54. In a three-compartment hybrid cell, the cell liquor is supplied to anode compartment 154 and water is introduced to central compartment 160. The products withdrawn from either cell may be approximately a 15 to 22 percent by weight NaCl solution, containing a small amount of NaOH and from the appropriate anode compartment, a purified, substantially chloride-free 40 percent by weight NaOH solution from the appropriate cathode compartment.

Although the hybrid cell may be operated in such a manner as to remove substantially all of the alkali metal hydroxide from the cell liquor, as indicated, it can be more efficient to operate the cell so as to leave a small proportion of the sodium hydroxide in the effluent from the anode compartment. This is done to improve the efficiency of the hybrid cell.

The effluent from the anode compartment of a main hybrid cell run at high efficiency may contain about 2% alkali metal hydroxide but this can then be fed to the anode compartment of another, "finishing", hybrid cell operated under conditions which are effective for removing the last few percent of the alkali metal from the anolyte. The conditions in such a finishing cell can be regulated to produce a concentrated alkali metal hydroxide product even though the feed to the anode compartment is relatively dilute. However, because the concentration of alkali metal hydroxide from such a dilute feed is accomplished at lower current efficiency than the concentration from more concentrated feed, the cell produces a smaller amount of useable power. In the latter case, the cell can be run under short circuited conditions which are effective for concentrating the alkali metal hydroxide but produce no useable power. However, because the bulk of the separation is accomplished in the main hybrid cell under conditions

providing higher efficiency, the overall efficiency of the process is not seriously diminished.

Although a main hybrid cell and a finishing cell may be operated in such a manner as to remove first the bulk and then the remainder of substantially all of the alkali metal hydroxide from the cell liquor, it can be more efficient to operate a cascade of hybrid cells hydrodynamically in series so as to remove only a small proportion of the sodium hydroxide in each anode compartment. When this is done, the current efficiency of the individual hybrid cells can be kept high to maximize the yield of electric current in each stage of the cascade.

FIG. 7A is a schematic illustration of a cocurrent cascade of individual hybrid cells showing the sequence and arrangement of the cells in the cascade. There are provided individual hybrid cells 70 which may be either two-compartment or three-compartment hybrid cells as discussed herein. The individual cells which each include an anode compartment 72 separated from a cathode compartment 74 by diffusion barrier 76, are preferably stacked in a vertical cascade and are operated hydrodynamically in series. Cell liquor from a chloralkali cell is introduced as anolyte to the inlet of the anode compartment of hybrid cell 78 at one end of the cascade. The anolyte flows through this anode compartment and is partially depleted of alkali metal hydroxide. The effluent from the anode compartment is withdrawn from the outlet and is introduced as anolyte into the anode compartment inlet of a second hybrid cell 80.

The anolyte passes through the remainder of the cascade in this manner. The effluent withdrawn from the anode compartment of the hybrid cell 82 at the other end of the cascade is substantially depleted of alkali metal hydroxide.

The catholyte also flows in series through the cells. For two-compartment cell cascades, the catholyte is introduced into the cathode compartment inlet of hybrid cell 78 at one end of the cascade. The catholyte is made to flow serially through the individual cathode compartments and is partially enriched in alkali metal hydroxide during each stage of the cascade.

For three-compartment cell cascades, the catholyte flows through both the central and cathode compartments of an individual cell before passing to the next stage of the cascade. The flow of catholyte is preferably cocurrent through the central and cathode compartments, although it need not be cocurrent to the flow of the anolyte.

The catholyte withdrawn from the appropriate cathode compartment outlet at the opposite end of the cascade contains a purified solution of caustic concentrated alkali metal hydroxide.

Each hybrid cell is operated under conditions which are effective for removing only a fraction of the alkali metal from the anolyte and concentrating it in the catholyte. The fraction may be determined by the number of cells operated in the cascade. Any number of stages can be employed in the cascade. There is no upper limit except for economies of cost and size required by the user.

Consequently, in the cascade, as distinguished from a single hybrid cell or the filter press hybrid cell systems previously described, each individual anode operates under a proportionately smaller anolyte concentration gradient between the inlet and outlet of the anode compartment. As a consequence voltage efficiency of the individual cells, and of the cascade as a whole, may be increased to its

practical maximum using diffusion anodes commercially available. For hybrid cell cascades using these anodes, the greater the number of stages, the smaller the concentration gradient of alkali metal hydroxide in each stage, and the higher the voltage efficiency of the individual cells.

As depicted in FIG. 7A, both the anolyte and the catholyte enter the cascade in the same stage. Cocurrent flow maintains a condition of plug flow in the compartments and to minimize any cross diffusion of caustic related to membrane imperfections such as holes, for example.

As depicted in FIG. 7B, the anolyte and the catholyte enter a. opposite ends of the cascade. Hybrid cell 84 at one end of the cascade serves both as the final stages for the anolyte and as the initial stage for the catholyte. The concentrations of sodium hydroxide in this cell are at their minimum values: e.g. anolyte at 0.5% NaOH or less, catholyte at about 10% NaOH.

Hybrid cell 86 at the opposite end of the cascade, serves as the initial stage for the anolyte and as the final stage for the catholyte, sodium hydroxide concentrations are maximized: anolyte at about 10% NaOH, catholyte at about 40% NaOH. However, within a countercurrent cascade, as compared to a cocurrent cascade, there is the least possible average difference in caustic concentration across the diffusion barriers. Countercurrent circulation may be practiced to minimize concentration differences of the caustic across the diffusion barrier of each cell.

As concentration gradients increase across the diffusion barrier, chemical driving forces are thought to promote back-diffusion of the caustic product from a high strength catholyte to the lower strength anolyte, which reduces the concentration of sodium hydroxide in the product and the overall efficiency of the process. Many commercially available diffusion barriers, such as the membranes

discussed previously, exhibit a decrease in permselectivity at concentration differences across the membrane above about 30% by weight caustic to the detriment of their efficiency in a hybrid cell in the process of the invention. A counter-current circulation may increase efficiency and product purity by minimizing the average concentration differential of sodium hydroxide throughout the cascade.

The cascade may be operated with either ascending or descending electrolytes for cocurrent circulation modes. A countercurrent cascade may be operated either with an ascending anolyte or an ascending catholyte.

It may be desirable to add a small portion of product catholyte to the catholyte entering the cascade, which may be pure water, to increase its conductivity. For this purpose, bypass 88 shown in both FIG. 7A and FIG. 7B may be included to provide flow of product catholyte from the last catholyte stage of the cascade to the feed of the first catholyte stage. Feed strengths ranging from above 0 to 25 percent by weight NaOH and preferably between about 10 and about 15 percent by weight are representative of by pass caustic provided for efficient operation.

Although the present invention has been described with reference to particular details and embodiments thereof, these details are intended to illustrate the invention, the scope of which is defined in the following claims.

CLAIMS

1. A process for the production of alkali metal hydroxide and electrical energy which comprises:

(a) introducing flow of an aqueous solution of at least one alkali metal hydroxide as anolyte to an anode compartment of at least one hybrid cell, the hybrid cell comprising a gas diffusion anode having first and second surfaces, a diffusion barrier selectively permeable to cations and having first and second surfaces, and a gas diffusion cathode having first and second surfaces, the first surface of said anode and the first surface of said diffusion barrier defining said anode compartment, the first surface of said cathode and said second surface of said diffusion barrier defining a cathode compartment, said anode compartment having an inlet and an outlet, said cathode compartment having an inlet and an outlet, said anolyte flowing from the inlet to the outlet of said anode compartment;

(b) introducing flow of an aqueous fluid medium receptive to alkali metal ions as catholyte through said cathode compartment from inlet to outlet;

(c) causing, by a flow of current through an external load between said cathode and said anode and generated by oxidation of hydrogen supplied to the second surface of said gas diffusion anode and generation of hydroxide ions by reduction of an oxygen-containing gas supplied to the second surface of the gas diffusion cathode, alkali metal ions to selectively pass from the anolyte through said diffusion barrier to the catholyte in the cathode compartment to form with cathode generated hydroxide ions, an aqueous solution of alkali metal hydroxide;

(d) withdrawing from said cathode compartment catholyte which is more concentrated in respect to alkali metal hydroxide than the aqueous medium introduced to said cathode compartment; and

(e) withdrawing from the outlet of said anode compartment anolyte depleted in alkali metal hydroxide.

2. A process as claimed in claim 1 in which the hybrid cell is a three-compartment hybrid cell comprising a diaphragm permeable to both anions and cations and having first and second surfaces located between the first surface of the cathode and the second surface of the diffusion barrier, the first surface of the diaphragm defining with the second surface of the diffusion barrier a central compartment, the second surface of the diaphragm defining with the first surface of the catnode the cathode compartment, the central compartment having an inlet and an outlet in flow communication with the inlet of said cathode compartment and wherein said flow of an aqueous fluid medium receptive to alkali metal ions is introduced as catholyte to the central compartment.

3. A process as claimed in claim 1 or 2 in which air flows over a second surface of the gas diffusion type cathode opposite said first surface in a quantity sufficient to remove water from the cathode to concentrate the solution of alkali hydroxide flowing through the cathode compartment.

4. A process as claimed in any one of the previous claims in which the aqueous solution of alkali metal hydroxide introduced to said anode compartment is a solution comprising up to about 25 percent by weight alkali metal hydroxide.

5. A process as claimed in any one of the previous claims in which the aqueous alkali metal hydroxide solution withdrawn from said cathode compartment contains alkali metal hydroxide in an amount up to about 40 percent by weight.

6. A process as claimed in any one of the previous claims in which the alkali metal hydroxide is sodium hydroxide.

7. A process as claimed in any one of the previous claims in which the aqueous solution of at least one alkali metal hydroxide introduced to said anode compartment is the aqueous effluent of at least one chloralkali cell which aqueous effluent comprises sodium hydroxide and sodium chloride.

8. A process as claimed in claim 7 in which said aqueous effluent solution of at least one chloralkali cell comprises up to about 25 weight percent sodium hydroxide and up to about 26 weight percent sodium chloride.

9. A process as claimed in claim 7 or 8 in which the aqueous effluent solution of the chloralkali cell introduced to said anode compartment comprises from about 10 to about 15 weight percent sodium hydroxide and up to about 15 weight percent sodium chloride.

10. A process as claimed in any one of the previous claims in which the flow of anolyte from the inlet to the outlet of the anode compartment, and the flow of catholyte from the inlet to the outlet of a compartment, are respectively substantially in one direction without appreciably mixing or back convection or diffusion of molecules and ions contained in said anolyte or catholyte.

11. A process as claimed in any one of the previous claims in which the solution withdrawn from said anode compartment contains alkali metal hydroxide in a concentration above about 0.01 percent by weight.

12. A process as claimed in any one of the previous claims in which a condition of plug flow is maintained in the anode and cathode compartments.

13. A process as claimed in any one of the previous claims in which the oxygen-containing gas is air.

14. A process as claimed in any one of the previous claims in which the hydrogen supplied to the anode is hydrogen generated by the chloralkali cell.

15. A process as claimed in any one of the previous claims in which a plurality of hybrid cells is operated hydraulically in series, whereby said anolyte flows sequentially through the anode compartments of the hybrid cells, and said catholyte flows sequentially through the cathode compartments of the hybrid cells.

16. A process as claimed in claim 15 in which the sequential flow of anolyte through the anode compartments is cocurrent to the sequential flow of catholyte through the cathode compartments.

17. A process as claimed in claim 15 in which the sequential flow of anolyte through the anode compartments is countercurrent to the sequential flow of catholyte through the cathode compartments.

18. A process as claimed in any one of claims 15 to 17 in which the flow of anolyte is ascending.

19. A process as claimed in any one of claims 15 to 17 in which the flow of anolyte is descending.

20. A process as claimed in any one of the previous claims in which a portion of the catholyte formed in the process is introduced to said aqueous fluid medium receptive to alkali metal ions introduced to increase the conductivity of said aqueous fluid medium receptive to alkali metal ions.

Fig. 1

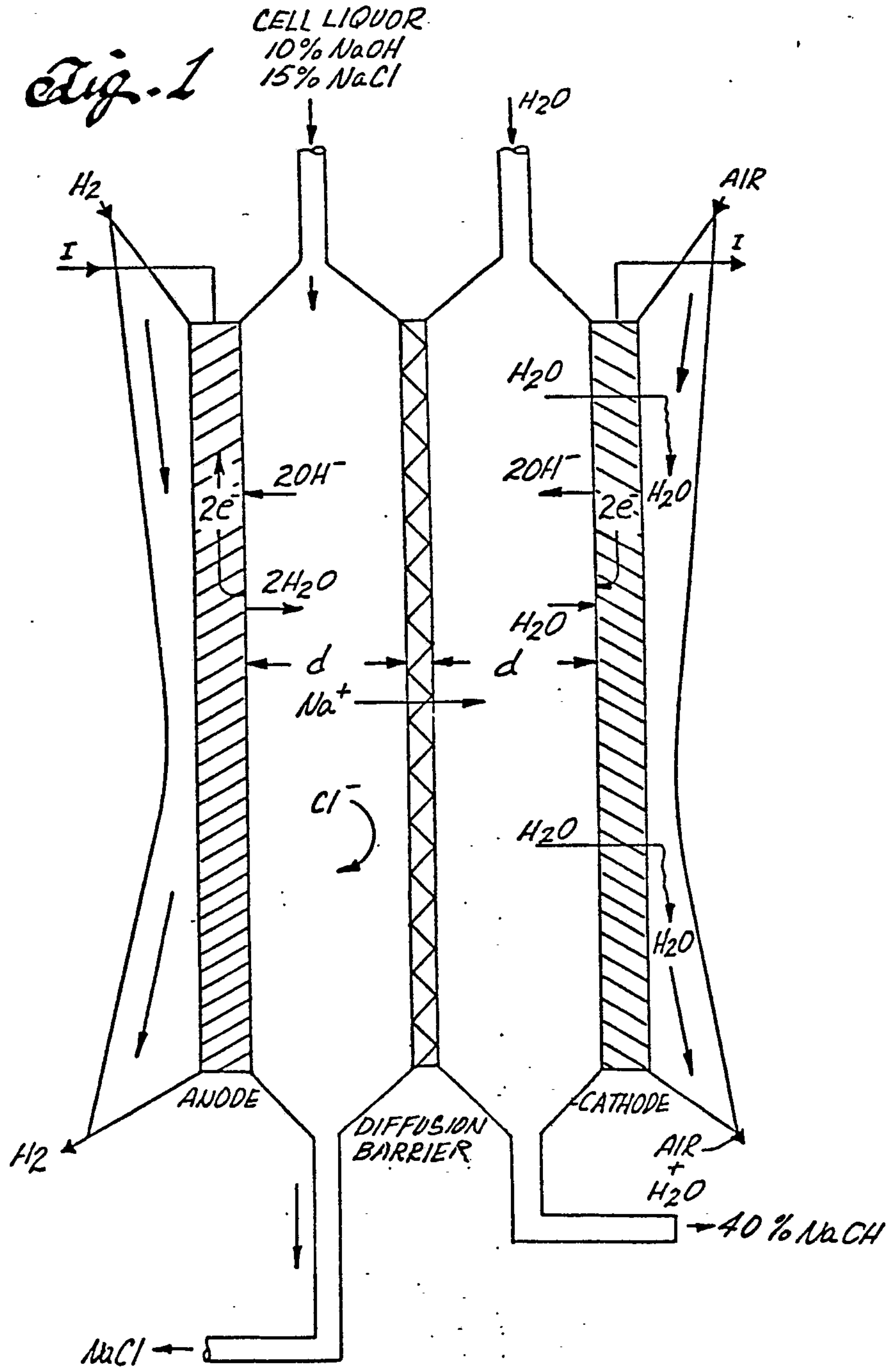

CELL LIQUOR
10% NaOH
15% NaCl
H2O
H2
AIR
I
I
H2O
H2O
2OH⁻
2OH⁻
2e⁻
2e⁻
2H2O
H2O
d
d
Na+
Cl⁻
H2O
H2O
ANODE
DIFFUSION BARRIER
CATHODE
H2
AIR + H2O
40% NaOH
NaCl

Fig. 2

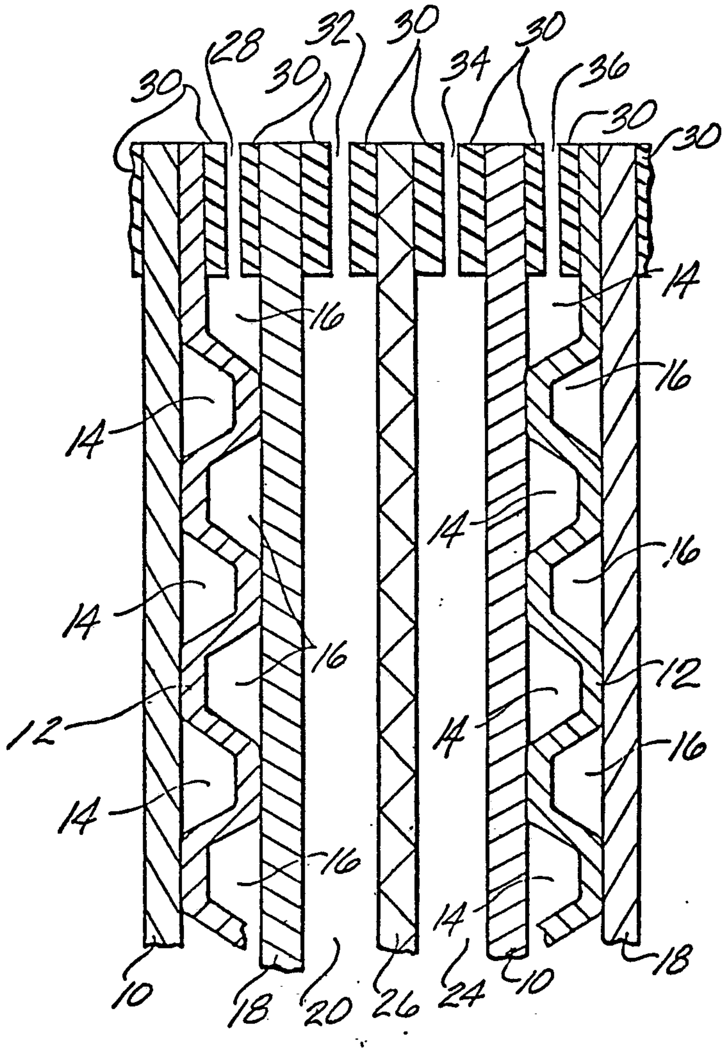

30
28
30
32
30
34
30
36
30
30
14
16
16
14
14
16
14
16
12
16
12
14
16
14
16
14
10
18
20
26
24
10
18

Fig. 3

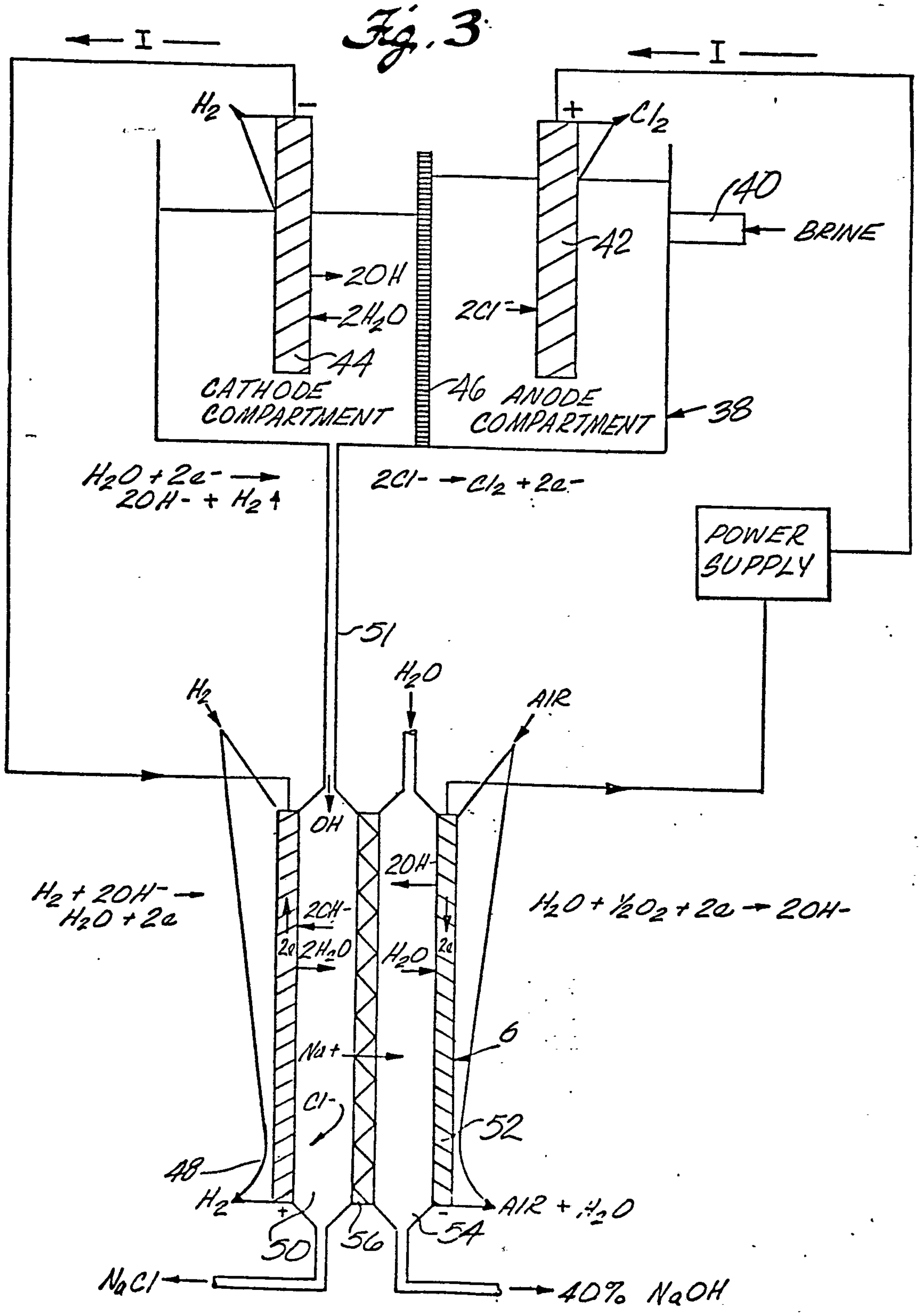
I
I
$H_2$
$Cl_2$
40
BRINE
42
2OH
$2H_2O$
2Cl-
44
CATHODE COMPARTMENT
46
ANODE COMPARTMENT
38
$H_2O + 2e^- \rightarrow 2OH^- + H_2\uparrow$
$2Cl^- \rightarrow Cl_2 + 2e^-$
POWER SUPPLY
51
$H_2O$
$H_2$
AIR
OH
$2OH^-$
$H_2 + 2OH^- \rightarrow H_2O + 2e$
$H_2O + \frac{1}{2}O_2 + 2e \rightarrow 2OH^-$
2OH-
2e
$2H_2O$
$H_2O$
2e
6
Na+
Cl-
52
48
$H_2$
AIR + $H_2O$
50
56
54
NaCl
40% NaOH

Fig. 4

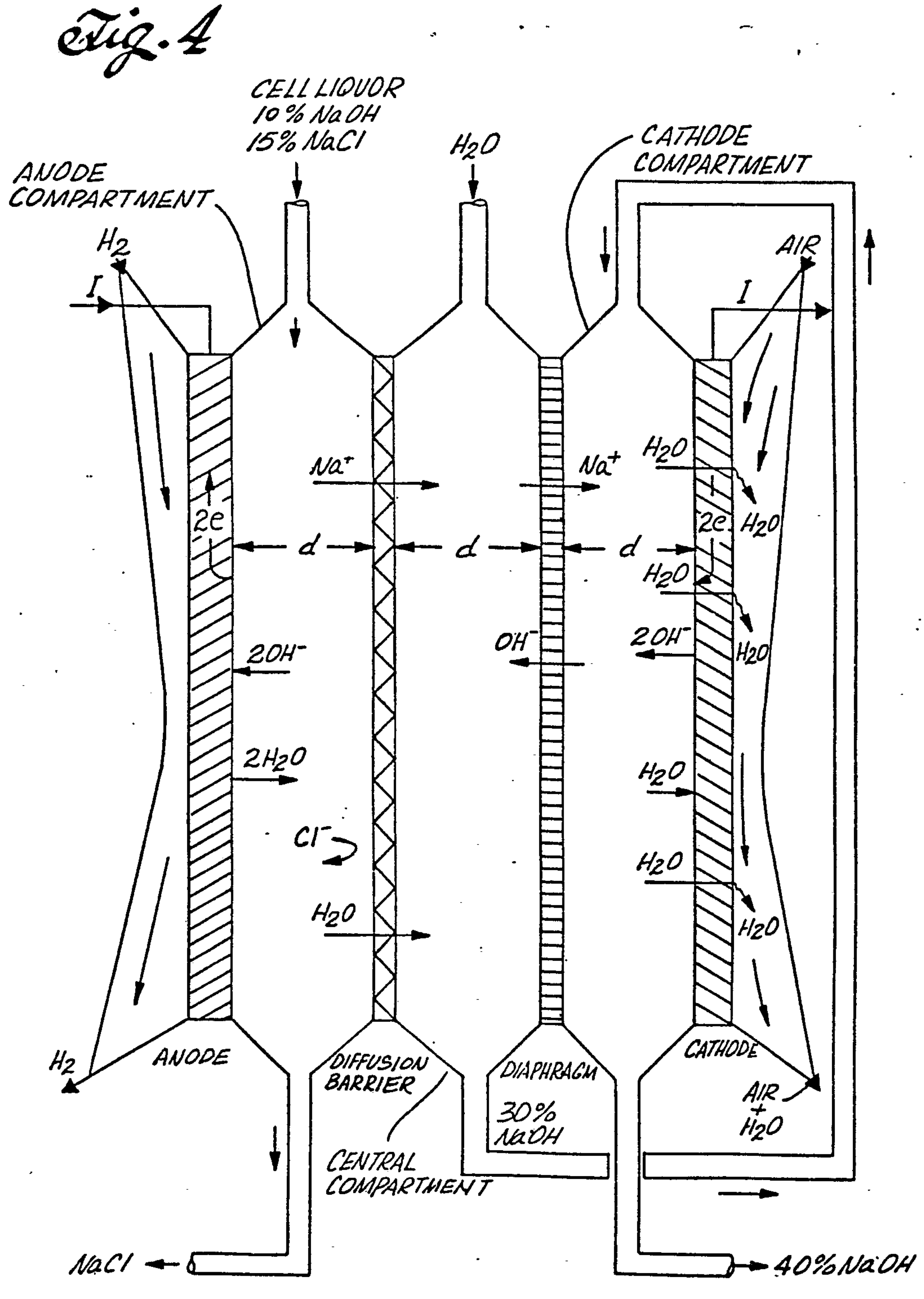
CELL LIQUOR
10% NaOH
15% NaCl
$H_2O$
ANODE COMPARTMENT
CATHODE COMPARTMENT
$H_2$
I
AIR
I
$Na^+$
$Na^+$
$H_2O$
$H_2O$
2e
d
d
d
2e
$H_2O$
$H_2O$
$2OH^-$
$OH^-$
$2OH^-$
$H_2O$
$2H_2O$
$H_2O$
$Cl^-$
$H_2O$
$H_2O$
$H_2O$
$H_2O$
$H_2$
ANODE
DIFFUSION BARRIER
DIAPHRAGM
CATHODE
AIR + $H_2O$
30% NaOH
CENTRAL COMPARTMENT
NaCl
40% NaOH

Fig. 5

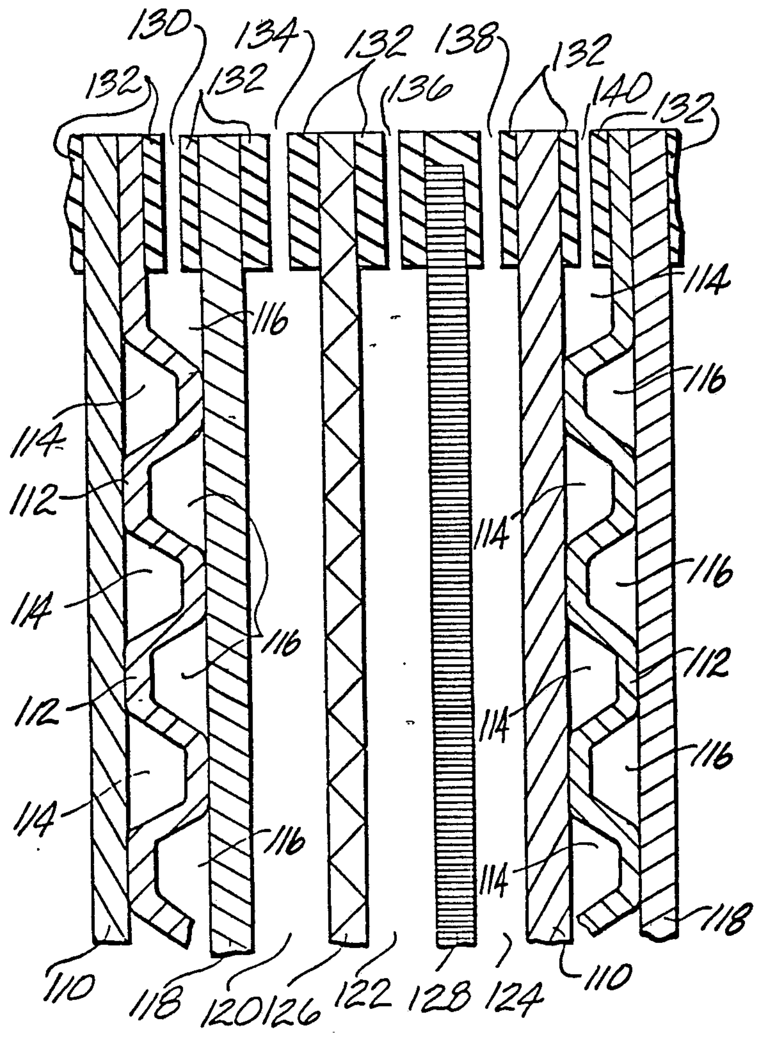
130
134
132
138
132
132
132
136
140
132
132
114
116
116
114
112
114
116
116
114
112
112
114
116
116
114
116
114
118
110
118
120
126
122
128
124
110

Fig. 6

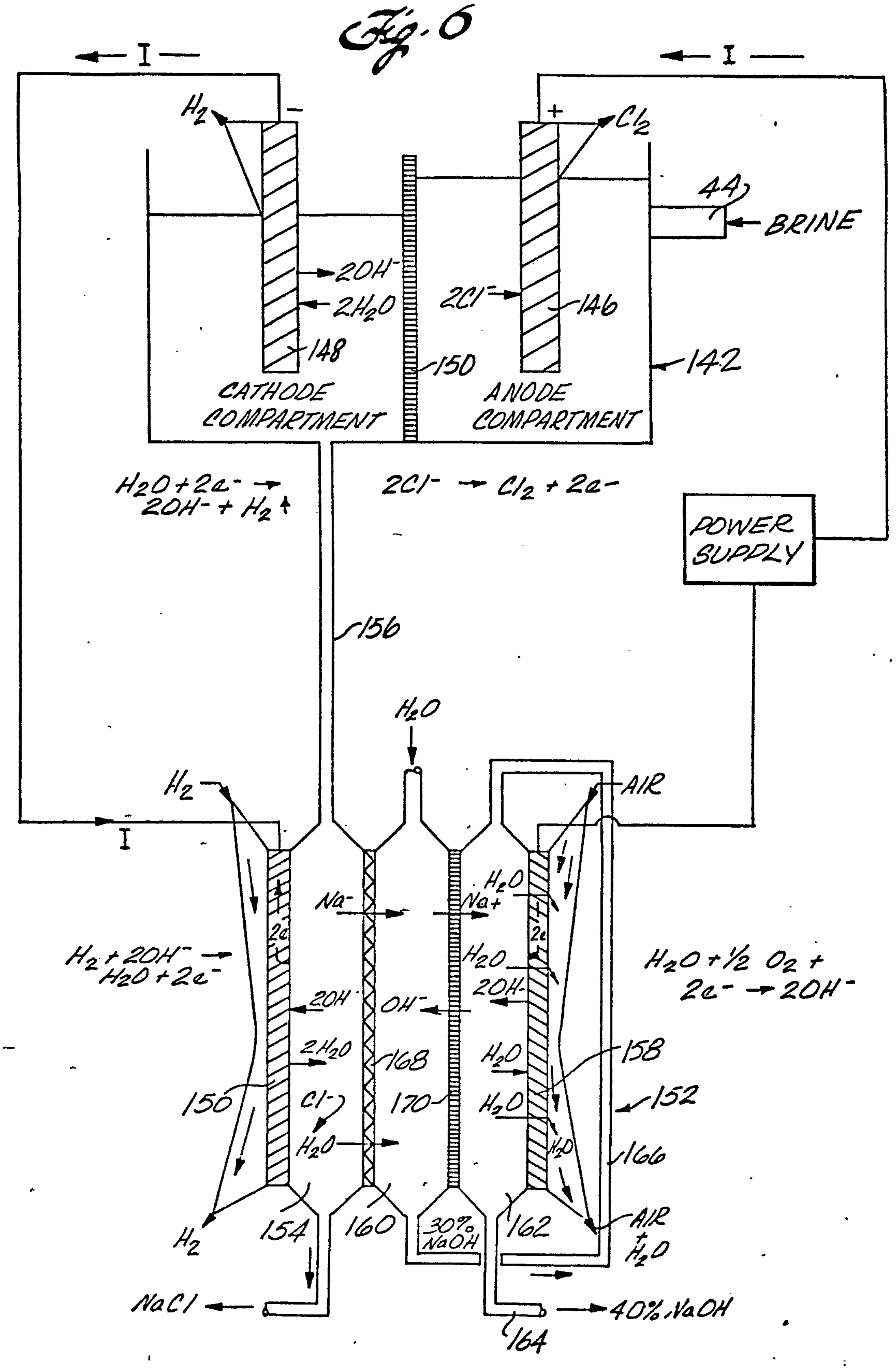
I
I
$H_2$
$Cl_2$
44
BRINE
$2OH^-$
$2H_2O$
$2Cl^-$
146
148
150
142
I
CATHODE COMPARTMENT
ANODE COMPARTMENT
$H_2O + 2e^- \rightarrow 2OH^- + H_2\uparrow$
$2Cl^- \rightarrow Cl_2 + 2e^-$
POWER SUPPLY
156
$H_2O$
$H_2$
AIR
I
$Na^-$
$Na^+$
$H_2O$
$H_2 + 2OH^- \rightarrow H_2O + 2e^-$
$H_2O + 1/2\ O_2 + 2e^- \rightarrow 2OH^-$
$2OH^-$
$OH^-$
$2H_2O$
168
158
150
$Cl^-$
170
152
166
$H_2$
154
160
30% NaOH
162
AIR + $H_2O$
NaCl
40% NaOH
164

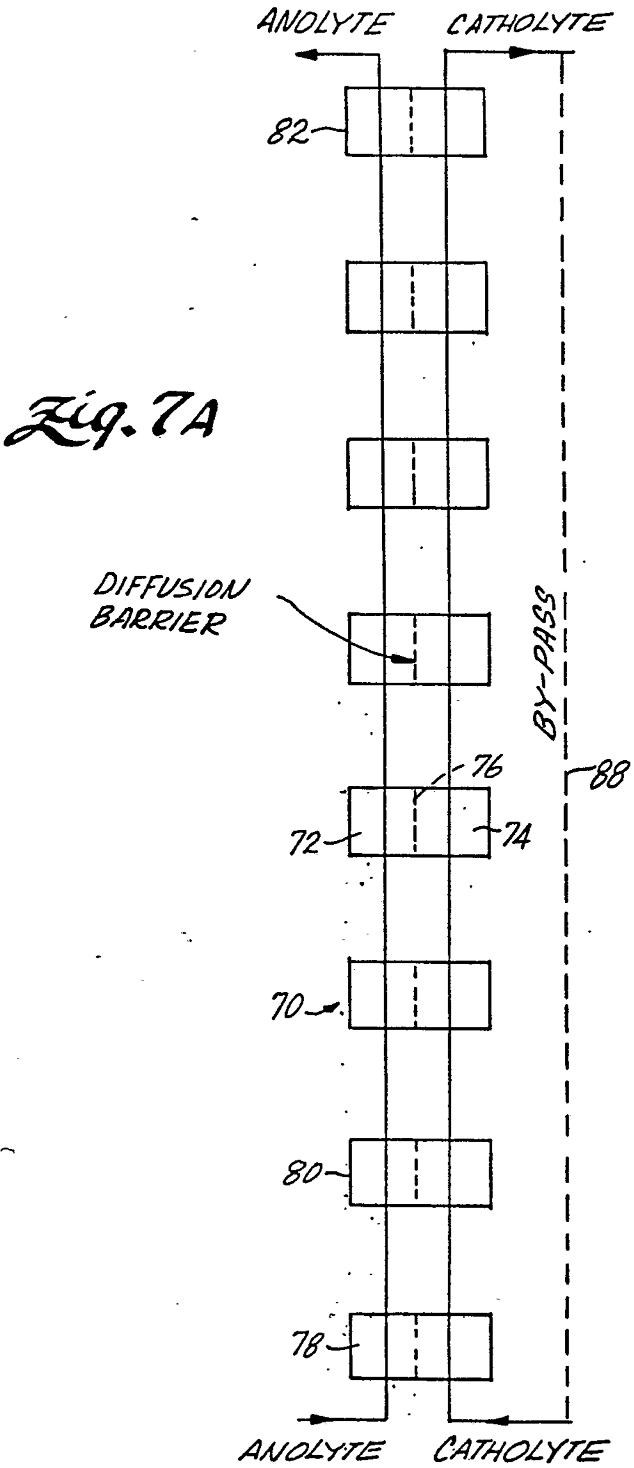
ANOLYTE
CATHOLYTE
82
DIFFUSION BARRIER
BY-PASS
76
88
72
74
70
80
78
ANOLYTE
CATHOLYTE

Fig. 7A

Fig-7B

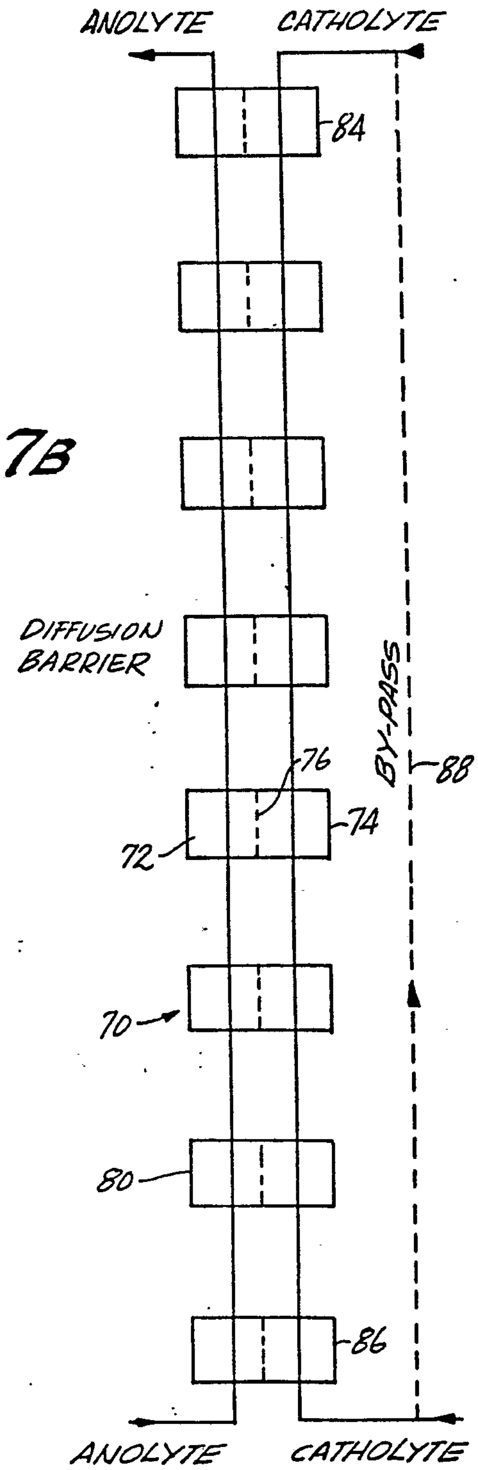
ANOLYTE
CATHOLYTE
84
DIFFUSION BARRIER
BY-PASS
88
76
74
72
70
80
86
ANOLYTE
CATHOLYTE

0019717

European Patent Office

# EUROPEAN SEARCH REPORT

Application number
EP 80 10 2155

## DOCUMENTS CONSIDERED TO BE RELEVANT

| Category | Citation of document with indication, where appropriate, of relevant passages | Relevant to claim |
|---|---|---|
| X | GB - A - 911 386 (IONICS INCORPORATED)<br>* Page 1, lines 11-28, 77-86; page 6, lines 13-42; page 7, lines 21-25; pages 10,11; example 2 *<br>-- | 1,5-7 |
|  | FR - A - 2 063 947 (J. JACQUELIN)<br>* Page 3, lines 30-39 *<br>-- | 1 |
| A | US - A - 4 093 531 (A.D. BABINSKY)<br>---- |  |

CLASSIFICATION OF THE APPLICATION (Int. Cl. 3)

C 25 B 5/00
H 01 M 8/22

TECHNICAL FIELDS SEARCHED (Int.Cl. 3)

C 25 B 5/00
H 01 M 8/00
8/06
C 25 B 1/16
1/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 22-09-1980 | GROSEILLER |

EPO Form 1503.1 06.78